# EUROPÄISCHE PATENTSCHRIFT

(11) **EP 1 054 912 B1**
(45) Veröffentlichungstag und Bekanntmachung des Hinweises auf die Patenterteilung: **17.12.2003**
(21) Anmeldenummer: 99910197.5
(22) Anmeldetag: 05.02.1999
(51) Int. Cl.: C08F 12/04

(54) **VERFAHREN ZUR RETARDIERTEN ANIONISCHEN POLYMERISATION**
METHOD FOR RETARDED ANIONIC POLYMERIZATION
PROCEDE DE POLYMERISATION ANIONIQUE RETARDEE

(30) Priorität: 18.02.1998 DE 19806774
(43) Veröffentlichungstag der Anmeldung: 29.11.2000
(73) Patentinhaber: BASF AKTIENGESELLSCHAFT, 67056 Ludwigshafen (DE)
(72) Erfinder: SCHADE, Christian, D-67061 Ludwigshafen (DE); FISCHER, Wolfgang, D-69190 Walldorf (DE); GAUSEPOHL, Hermann, D-67112 Mutterstadt (DE); KLOSTERMANN, Rainer, D-68775 Ketsch (DE); WARZELHAN, Volker, D-67273 Weisenheim (DE); FONTANILLE, Michel, F-33400 Talence (FR); DEFFIEUX, Alain, F-33402 Talence-Cedex (FR); DESBOIS, Philippe, D-67487 Maikammer (DE)
(86) Internationale Anmeldenummer: EP9900766
(87) Internationale Veröffentlichungsnummer: WO99042498

(56) Entgegenhaltungen:
- EP-A- 0 234 512
- DE-A- 2 628 380
- US-A- 3 716 495

## Beschreibung

### Beschreibung

Die Erfindung betrifft ein Verfahren zur Homopolymerisation von vinylaromatischen Monomeren oder Copolymerisation von vinylaromatischen Monomeren und Dienen in Gegenwart von mindestens einem Alkalimetallorganyl, mindestens einem Magnesiumorganyl und mindestens einem Aluminiumorganyl sowie eine Initiatorzusammensetzung zur Durchführung des Verfahrens.

Die anionische Polymerisation verläuft in der Regel sehr schnell, so daß eine Kontrolle wegen der beträchtlichen Wärmeentwicklung im technischen Maßstab schwierig wird. Erniedrigt man die Polymerisationstemperatur, so steigt die Viskosität insbesondere bei konzentrierten Lösungen zu stark an. Eine Verringerung der Initiatorkonzentration erhöht das Molekulargewicht des gebildeten Polymers. Eine Kontrolle der Reaktion durch eine entsprechende Verdünnung der Monomeren führt zu einem höheren Lösemittelbedarf und zu geringeren Raum-Zeitausbeuten.

Es wurden daher verschiedene Zusätze zu den anionischen Polymerisationsinitiatoren vorgeschlagen, die die Polymerisationsgeschwindigkeit beeinflussen.

Über den Einfluß von Lewissäuren und Lewisbasen auf die Geschwindigkeit der anionischen Polymerisation von Styrol wurde in Welch, Journal of the American Chemical Society, Vol 82 (1960), Seite 6000 - 6005 berichtet. So wurde gefunden, daß geringe Mengen von Lewis-Basen wie Ether und Amine die durch n-Butyllithium initiierte Polymerisation von Styrol bei 30°C in Benzol beschleunigen, wohingegen Lewis-Säuren wie Zink- und Aluminiumalkyle die Polymerisationsgeschwindigkeit reduzieren bzw. in überstöchiometrischen Mengen die Polymerisation zum Stillstand bringen.

Hsieh und Wang untersuchen in Macromolecules, Vol 19 (1966), Seite 299 bis 304 die Komplexbildung von Dibutylmagnesium mit dem Alkyllithiuminitiator bzw. der lebenden Polymerkette in Anwesenheit und Abwesenheit von Tetrahydrofuran und finden, daß Dibutylmagnesium die Polymerisationsgeschwindigkeit von Styrol und Butadien herabsetzt, ohne die Stereochemie zu beeinflussen.

Aus der US-Patentschrift 3 716 495 sind Initiatorzusammensetzungen für die Polymerisation von konjugierten Dienen und Vinylaromaten bekannt, bei denen eine effektivere Nutzung des Lithiumalkyls als Initiator durch den Zusatz eines Metallalkyls eines Metalls der Gruppe 2a, 2b oder 3a des Periodensystems, wie beispielsweise Diethylzink und polare Verbindungen wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

Die W097/33923 beschreibt Initiatorzusammensetzungen für die anionische Polymerisation von Vinylmonomeren, die Alkali und Magnesiumverbindungen mit Kohlenwasserstoffresten enthalten und ein molares Verhältnis von [Mg] / [Alkalimetall] von mindestens 4 aufweisen.

Die nicht vorveröffentlichte Patentanmeldung PCT/EP97/04497 beschreibt kontinuierliche Verfahren zur anionischen Polymerisation oder Copolymerisation von Styrol- oder Dienmonomeren mit Alkalimetallalkyl als Polymerisationsauslöser in Gegenwart eines mindestens zweiwertig auftretenden Elements als Geschwindigkeitsregler.

Zur Polymerisation von konjugierten Dienen mit hoher 1,4-trans-Verknüpfung sind beispielsweise aus der EP-A 0 234 512 verschiedene Initiatormischungen bekannt, die Alkali-, Erdalkalimetalle-, Aluminium, Zink oder Seltenerdmetalle enthalten können. Die deutsche Offenlegungsschrift 26 28 380 lehrt z. B. die Verwendung von Erdalkalialuminaten als Cokatalysator zu einem lithiumorganischen Initiator zur Herstellung von Polymerisaten oder Copolymerisaten von kunjugierten Dienen mit einem hohen Gehalt an trans-1,4-Bindungen und geringen Gehalten an 1,2- oder 3,4-Bindungen. Dies soll zu einer Erhöhung der Polymerisationsgeschwindigkeit führen.

Zur Herstellung von Polydienen mit hohem Anteil an 1,2-Verknüpfung der Dienmonomereinheiten wird die Verwendung von cyclischen Acetalen eines Glyoxals (US 4,520,123, US 4,591,624) bzw. von tri-substituierten Phoshinoxiden (US 4,530,984) beschrieben. Zusätzlich zu den anionischen Initiatoren auf Basis von Lithium können Magnesium und/oder Aluminiumalkyle als Coinitatoren eingesetzt werden.

Bei der Verwendung von Zusätzen wie Aluminiumalkylen, die stark retardierend auf die anionische Polymerisation wirken, ist eine exakte Dosierung und Temperaturkontrolle erforderlich. Eine geringe Unterdosierung kann zu einer ungenügenden Verlangsamung der Reaktionsgeschwindigkeit, eine geringe Überdosierung aber zum Stillstand der Polymerisation führen.

Schwach retardierende Zusätze wie Magnesiumdialkyle müssen für eine ausreichende Retardierung der Polymerisationsgeschwindigkeit in Mengen zugesetzt werden, die wesentlich über der stöchiometrischen Menge bezogen auf den Alkaliorganylinitiator liegen. Die Magnesiumorganyle wirken zwar alleine nicht als Polymerisationsinitiator, können aber in Gegenwart von Lithiumorganylen zusätzliche Polymerketten initiieren. Das Molekulargewicht des Polymeren hängt folglich nicht mehr nur vom molaren Verhältnis von Alkaliorganylinitiator zu Monomer ab, sondern wird durch die Menge an Magnesiumorganyl, Temperatur und Konzentration beeinflußt. Neben den höheren Kosten können hohe Mengen an retardierenden Zusätzen auch zu veränderten Produkteigenschaften, wie schlechtere Transparenz führen, da die Initatorbestandteile gewöhnlich im Polymeren verbleiben.

Aufgabe der Erfindung war es, ein Verfahren zur Homopolymerisation von vinylaromatischen Monomeren oder Copolymerisation von vinylaromatischen Monomeren und Dienen bereitzustellen, das die vorgenannten Nachteile nicht aufweist. Insbesondere sollte eine Initatorzusammensetzung für das Verfahren gefunden werden, die die-Einstellung der Polymerisationsgeschwindigkeit in weiten Temperatur- und Konzentrationsbereichen ermöglicht.

Demgemäß wurde ein Verfahren zur Homopolymerisation von vinylaromatischen Monomeren oder Copolymerisation von vinylaromatischen Monomeren und Dienen gefunden, wobei man die Monomeren in Gegenwart von mindestens einem Alkalimetallorganyl, mindestens einem Magnesiumorganyl und mindestens einem Aluminiumorganyl polymerisiert.

Weiterhin wurde ein Initiatorzusammensetzung enthaltend mindestens ein Alkalimetallorganyl, mindestens ein Magnesiumorganyl und mindestens einem Aluminiumorganyl gefunden, wobei
a) das molare Verhältnis von Magnesium zu Alkalimetall im Bereich von 0,2 bis 3,8,
b) das molare Verhältnis von Aluminium zu Alkalimetall im Bereich von 0,2 bis 4 liegt,

sowie ein Verfahren zur Herstellung einer Initiatorzusammensetzung wobei man die in inerten Kohlenwasserstoffen gelösten Metallorganyle zusammen vermischt und bei einer Temperatur im Bereich von 0 bis 120°C mindestens 5 Minuten reifen läßt.

Als Alkalimetallorganyl können die üblicherweise als anionische Polymerisationsinitiatoren eingesetzten mono-, bi- oder multifunktionellen Alkalimetallalkyle, -aryle oder -aralkyle verwendet werden. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-Dilithio-2-buten oder 1,4-Dilithiobenzol. Die benötigte Menge an Alkalimetallorganyl richtet sich nach dem gewünschten Molekulargewicht, der Art und Menge der weiteren, eingesetzten Metallorganyle sowie der Polymerisationstemperatur. In der Regel liegt sie im Bereich von 0,0001 bis 5 Molprozent bezogen auf Gesamtmonomerenmenge.

Geeignete Magnesiumorganyle sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden die als Handelsprodukte verfügbaren Ethyl- Propyl- oder Butylverbindungen eingesetzt. Besonders bevorzugt wird das in Kohlenwasserstoffen lösliche (n-Butyl) (s-Butyl)magnesium eingesetzt.

Als Aluminiumorganyle können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle wie Triethylaluminium, Tri-iso-Butylaluminium, Tri-n-butylaluminium, Tri-iso-propylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen oder die Alkoholat-, Thiolat-, Amid-, Imid- oder Phosphid-Gruppen tragen. Beispiele sind Diethylaluminium-ethoxid, Diisobutylaluminium-ethoxid, Diisobutyl- (2, 6-di-tert. -butyl-4-methyl-phenoxy) aluminium (CAS-Nr. 56252-56-3), Methylaluminoxan, isobutyliertes Methylaluminoxan, Isobutylaluminoxan, Tetraisobutyldialuminoxan, Bis(diisobutyl)aluminiumoxid, oder Diethylaluminium -(N,N-dibutylamid).

Die molaren Verhältnisse der Metallorganyle untereinander können in weiten Grenzen variieren und richten sich vor allem nach der gewünschten Retardierungswirkung, der Polymerisationstemperatur, der Monomerzusammensetzung und -konzentration sowie dem gewünschten Molekulargewicht.

Zweckmäßigerweise liegt das molare Verhältnis von Magnesium zu Alkalimetall im Bereich von 0,1 bis 10, bevorzugt im Bereich von 0,2 bis 3,8, besonders bevorzugt im Bereich von 1 bis 3. Das molare Verhältnis von Aluminium zu Alkalimetall liegt im Bereich von 0,1 bis 10, bevorzugt im Bereich von 0,2 bis 4, besonders bevorzugt im Bereich von 0,7 bis 2. Das molare Verhältnis von Magnesium zu Aluminium liegt bevorzugt im Bereich von 0,05 bis 8.

Bei dem erfindungsgemäBen Verfahren werden hauptsächlich Alkalimetallorganyle, Magnesiumorganyle und Aluminiumorganyle eingesetzt. Bevorzugt sind Barium-, Calcium- oder Strontiumorganyle nur in unwirksamen Mengen vorhanden, die die Polymerisationsgeschwindigkeit oder Copolymerisationsparameter nur unwesentlich beeinflussen. Auch sollen Übergangsmetalle oder Lanthanoide, insbesondere Titan und Zirkon nicht in wesentlichen Mengen zugegen sein.

Die Alkalimetall-, Magnesium- und Aluminiumorganyle können zusammen oder einzeln, zeitlich oder räumlich versetzt der Monomermischung zugegeben werden. Bevorzugt werden die Alkalimetall-, Magnesium- und Aluminiumalkyle als vorgemischte Initiatorzusammensetzung verwendet.

Zur Herstellung der Initiatorzusammensetzung können die Alkalimetallorganyle, die Magnesiumorganyle und die Aluminiumorganyle in einem inerten Kohlenwasserstoff, beispielsweise n-Hexan, n-Heptan, Cyclohexan, Ethylbenzol oder Toluol als Lösungsmittel gelöst und zusammengegeben werden. Vorzugsweise vermischt man die in den Kohlenwasserstoffen gelösten Metallorganyle miteinander und läßt die Mischung mindestens 5 Minuten bei einer Temperatur im Bereich von 0 bis 120°C reifen. Gegebenenfalls kann hierzu ein Lösungsvermittler, beispielsweise Diphenylethylen zugegeben werden, um das Ausfallen einer der Komponenten aus dieser Initiatorlösung zu verhindern.

Die Initiatorzusammensetzung eignet sich zur Polymerisation von anionisch polymerisierbaren Monomeren. Bevorzugt wird die Initiatorzusammensetzung zur Homopolymerisation oder Copolymerisation von vinylaromatischen Monomeren und Dienen eingesetzt. Bevorzugte Monomere sind Styrol, α-Methylstyrol, p-Methylstyrol, Ethylstyrol, tert.-Butylstyrol, Vinyltoluol oder 1,1-Diphenylethylen, Butadien, Isopren, 2,3-Dimethylbutadien, 1,3-Pentadien,1,3-Hexadiene oder Piperylen oder deren Mischungen.

Die Polymerisation kann in Gegenwart eines Lösungsmittels vorgenommen werden. Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Dekalin, Benzol, Alkylbenzole wie Toluol, Xylol, Ethylbenzol oder Cumol oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und/oder vor Verwendung destilliert werden. Vorzugsweise wird das Lösungsmittel aus dem Verfahren nach Kondensation und der genannten Reinigung wiederverwendet.

Durch die Zusammensetzung und Menge der Metallorganyle ist es möglich die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Nach Beendigung der Polymerisation können die lebenden Polymerketten mit einem Kettenabbruchmittel verschlossen werden. Als Kettenabbruchmittel eignen sich protonenaktive Substanzen oder Lewis-säuren wie beispielsweise Wasser, Alkohole, aliphatische und aromatische Carbonsäuren sowie anorganische Säuren wie Kohlensäure oder Borsäure.

Die Zielprodukte können Homopolymerisate oder Copolymerisate sowie deren Mischungen sein. Bevorzugt werden Polystyrol sowie Styrol-Butadien-Blockcopolymerisate erhalten. Es ist auch möglich, mit dem erfindungsgemäßen Verfahren schlagzähes Polystyrol (HIPS) herzustellen, wobei als Kautschuke Polybutadien, Styrol-Butadien-Blockcopolymerisate oder Mischungen davon eingesetzt werden können.

Zur Kopplung der Blockcopolymeren könne mehrfunktionelle Verbindungen wie beispielsweise polyfunktionelle Aldehyde, Ketone, Ester, Anhydride oder Epoxide eingesetzt werden.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das erfindungsgemäße Verfahren führt je nach Wahl der Initiatorkonzentration und -Zusammensetzung, des speziell angewandten Verfahrensablaufs und anderer Parameter, wie Temperatur und evtl. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Vorzugsweise wird das Verfahren kontinuierlich durchgeführt. Bevorzugt wird mindestens ein Teil des Umsatzes, insbesondere Umsätze zwischen 50 und 100 % in einem nicht rückvermischenden Reaktor oder Reaktorabschnitt durchgeführt.

Mit der erfindungsgemäßen Initiatorzusammensetzung läßt sich die Reaktionsgeschwindigkeit ohne Nachteile für die Polymereigenschaften gegenüber der anionischen Polymerisation mit einem Alkaliorganyl deutlich absenken bzw. die Temperatur erhöhen; dadurch wird es einerseits möglich, die Entwicklung der Polymerisationswärme über einen längeren Zeitraum zu verteilen und damit in einem kontinuierlichen Verfahren den zeitlichen bzw. - z.B. bei einem Rohrreaktor örtlichen - Temperaturverlauf einzustellen. Z.B. kann dafür gesorgt werden, daß bei anfänglich hoher Monomerkonzentration noch keine hohe Temperatur auftritt, andererseits ist bei der schließlich, d.h. bei einem weiter fortgeschrittenen Umsatz auftretenden hohen Temperatur eine ungestörte Polymerisation bei gleichzeitig hoher Raumzeitausbeute möglich. Bei diesem Verfahren treten Wandbeläge nicht mehr auf.

### Beispiele:

### Herstellung der Initiatorzusammensetzungen:

Die entsprechenden Mengen einer 1,6 molaren s-Butyllithiumlösung (sBuLi) in Cyclohexan (Fa. Chemmetall), einer 1 molaren (n-Butyl)(s-butyl)magnesium -Lösung (DBM) in n-Heptan (Fa. Aldrich) einer 1,6 molaren Lösung von Triisobutylaluminium (TIBA) in Toluol (Fa. Witco) wurden bei 25°C zusammengegeben und vor der Verwendung mindestens 30 Minuten gerührt.

### Beispiel 1

In einen 2,35 1 Rührkessel mit Ankerrührer wurden unter Stickstoff 320 g Styrol und 1280 g Toluol vorgelegt und unter Rühren auf 80°C erwärmt. Nach Erreichen dieser Temperatur wurde eine Initiatorlösung (molares Verhältnis Li/Mg/Al = 1/3/0.9) aus 1,07 ml einer 1,6 molaren s-Butyllithiumlösung in Cyclohexan, 5,1 ml einer 1 molaren DBM-Lösung in n-Heptan und 0,97 ml einer 1,6 molaren Lösung von Triisobutylaluminium in Toluol zugegeben und die Polymerisationslösung bei 80°C gehalten. Der Umsatz betrug nach 25 min 24 %, nach 60 min 51 %, nach 2 h 74 %. Nach 3 h bei 80°C wurde die Polymerisation durch Zugabe von 4 ml Ethanol bei einem Umsatz von 86 % abgebrochen. Man erhielt eine viskose Lösung des Polymeren mit einem zahlenmittleren Molekulargewicht von Mₙ = 93600 g/mol und einer Uneinheitlichkeit der Verteilung von M_{w}/Mₙ = 1,51.

### Beispiel 2

Beispiel 1 wurde wiederholt mit dem Unterschied, daß eine Initiatorlösung (molares Verhältnis Li/Mg/Al = 1/1.5/0.9) aus 1,55 ml einer 1,6 molaren s-Butyllithiumlösung in Cyclohexan, 3,71 ml einer 1 molaren DBM-Lösung in n-Heptan und 1,4 ml einer 1,6 molaren Lösung von Triisobutylaluminium in Toluol verwendet wurde. Der Umsatz betrug nach 30 min 61 %, nach 60 min 82 %. Nach 2,5 h bei 80°C wurde die Polymerisation bei einem Umsatz von 97 % durch Zugabe von 4 ml Ethanol abgebrochen. Man erhielt eine viskose Lösung des Polymeren mit einem zahlenmittleren Molekulargewicht von Mₙ = 94340 g/mol und einer Uneinheitlichkeit der Verteilung von M_{w}/Mₙ = 1,35.

### Vergleichsversuch 1:

Beispiel 2 wurde wiederholt mit dem Unterschied, daß eine Initiatorlösung (molares Verhältnis Li/Mg = 1/1.5) aus 1,55 ml einer 1,6 molaren s-Butyllithiumlösung in Cyclohexan, 3,71 ml einer 1 molaren DBM-Lösung in n-Heptan verwendet wurde. Die Polymerisationslösung konnte nicht auf 80°C gehalten werden.

### Beispiel 3

Beispiel 1 wurde wiederholt mit dem Unterschied, daß eine Initiatorlösung (molares Verhältnis Li/Mg/Al = 1/2.25/0.9) aus 3,0 ml einer 1,6 molaren s-Butyllithiumlösung in Cyclohexan, 11 ml einer 1 molaren DBM-Lösung in n-Heptan und 2,8 ml einer 1,6 molaren Lösung von Triisobutylaluminium in Toluol zu der auf 100°C erwärmten Monomerlösung zugegeben wurde. Der Umsatz betrug nach 10 min 29 % und nach 25 min 53 %. Nach 40 min bei 100°C wurde die Polymerisation bei einem Umsatz von 61 % durch Zugabe von 4 ml Ethanol abgebrochen. Man erhielt eine viskose Lösung des Polymeren mit einem zahlenmittleren Molekulargewicht von Mₙ = 161300 g/mol und einer Uneinheitlichkeit der Verteilung von M_{w}/Mₙ = 1,53.

### Vergleichsversuch 2:

Beispiel 3 wurde wiederholt mit dem Unterschied, daß nacheinander 2,8 ml einer 1,6 molaren Lösung von Triisobutylaluminium in Toluol, 11 ml einer 1 molaren DBM-Lösung in n-Heptan und 3,0 ml einer 1,6 molaren s-Butyllithiumlösung in Cyclohexan zu der auf 100°C erwärmten Monomerlösung zugegeben wurden. Nach Zugabe der s-Butyllithiumlösung wurde eine starke Erwärmung des Reaktorinhalts beobachtet, die sich nicht kontrollieren ließ.

### Beispiel 4:

In einer ausgeheizten Glasampulle wurden 6 g Styrol und 24 g . Toluol unter Schutzgas abgefüllt und mit einem Septum gasdicht verschlossen. Mit einer Spritze wurde die Initiatorlösung aus der entsprechenden Mengen einer 1,6 molaren s-Butyllithiumlösung (sBuLi) in Cyclohexan (Fa. Aldrich), einer 1 molaren (n-Butyl)(sbutyl)magnesium -Lösung (DBM) in n-Heptan (Fa. Chemmetall) einer 1,6 molaren Lösung von Triisobutylaluminium (TIBA) in Toluol (Fa. Witco) zugegeben. Die Ampulle wurde anschließend in ein Wärmebad bei 100°C eingetaucht. Nach 12 bzw. 24 Stunden wurde die Polymerisation durch Zusatz von 1 ml Ethanol abgebrochen. Die Initiatorzusammensetzung, Reaktionsbedingungen und Umsatz sind in Tabelle 1 zusammengestellt.

**Tab. 1:**

| Polymerisation von Styrol mit einer Initiatorzusammensetzung aus s-BuLi /DBM / TIBA | | | | |
|---|---|---|---|---|
| | 4a | 4b | 4c | 4d (Vergleichsversuch) |
| (iBu)₃Al [mhm] * | 2,5 | 2,5 | 1,4 | 3 |
| (nBu)(sBu)Mg [mhm]* | 4,25 | 3,75 | 4,5 | - |
| s-BuLi [mhm] * | 0,85 | 1, 25 | 0,45 | 1 |
| Li / Mg / Al | 1 / 5 / 3 | 1 / 3 / 2 | 1 / 10 / 3 | 1 / 0 / 3 |
| Temp. [°C] | 100 | 100 | 100 | 100 |
| Zeit [h] | 12 | 12 | 24 | 24 |
| Umsatz [%] | 18 | 31 | 23 | 1,4 |

| | | | | |
|---|---|---|---|---|
| * mhm = mmol pro 100 g Styrol | | | | |

Die Polymerisation von Styrol mit s-BuLi wird durch den Zusatz von Triisobutylaluminium bei einem molaren Verhältnis von Al/Li von 3/1 nahezu inhibiert (4d). Erstaunlicherweise wird diese Inhibierung durch weiteren Zusatz von DBM aufgehoben (4a, b, c).

### Beispiel 5:

Beispiel 4 wurde mit den in den Tabellen 2 a und 2 b zusammengestellten Initiatorkomponenten und Reaktionsbedingungen wiederholt.

**Tab. 2a:**

| Polymerisation von Styrol (Initiatorzusammensetzung mit unterschiedlicher Aluminiumkomponente) | | | | | | |
|---|---|---|---|---|---|---|
| Beispiel | Al-Verbindung | DBM [mhm]^{a} | s-BuLi [mhm]^{a} | Temp. [°C] | Zeit [h] | Umsatz [%] |
| 5a | 1 mhm Et₂AlOEt | 3,75 | 1,25 | 80 | 4 | 59 |
| 5b | 1 mhm iBu₂AlOEt | 3,75 | 1,25 | 80 | 4 | 62 |
| 5c | 1 mhm (iBu)₃Al | 3,75 | 1,25 | 80 | 4 | 49 |

| | | | | | | |
|---|---|---|---|---|---|---|
| a) mhm = mmol pro 100 g Styrol | | | | | | |

**Tab. 2b:**

| Polymerisation von Styrol (Initiatorzusammensetzung mit unterschiedlicher Magnesiumkomponente) | | | | | | |
|---|---|---|---|---|---|---|
| Versuch | Mg-Verbindung | (iBu)₃Al [mhm]^{a} | s-BuLi [mhm]^{a} | Temp. [°C] | Zeit [h] | Umsatz [%] |
| 5d | 4 mhm (sBu)(nBu)Mg | 0,8 | 1,25 | 80 | 4 | 53 |
| 5e | 4 mhm BOM^{b} | 0,8 | 1,25 | 80 | 4 | 47 |
| 5f | 4 mhm (nHexyl)₂Mg | 0,8 | 1,25 | 80 | 4 | 58 |

| | | | | | | |
|---|---|---|---|---|---|---|
| a) mhm = mmol pro 100 g Styrol b) BOM = (nButyl)_{1,5}(n-Octyl)_{0,5}Mg | | | | | | |

### Kontinuierliche Polymerisation von Styrol:

### Beispiel 6a:

Für die kontinuierliche Polymerisation wurde ein doppelwandiger, 31 fassender Rührkessel mit einem Standard-Ankerrührer verwendet. Der Reaktor war für einen Druck von 60 bar ausgelegt und mit einem Wärmeträgermedium für eine isotherme Polymerisationsführung temperiert. Die Temperaturmessung erfolgte über zwei direkt in die Polymerisationsmischung tauchende Thermoelemente. Alle Arbeiten erfolgten unter Schutzgas.

Der Rührkessel wurde unter Rühren (100 Umdrehungen pro Minute) mit 200 g/h Toluol und 800 g/h Styrol beschickt. Gleichzeitig wurde eine vorgemischte Initiatorlösung (molares Verhältnis Li/ Mg/Al = 1/0,2/0,95) aus 2,38 ml/h einer einer 1,6 molaren s-Butyllithiumlösung in Cyclohexan, 0,76 ml/h einer 1 molaren DBM-Lösung in n-Heptan, 2,26 ml/h einer 1,6 molaren Lösung von Triisobutylaluminium in Toluol und 16,2 ml/h Toluol über eine gemeinsame Zuführung mit Mischelementen vorgemischt und zudosiert. Nach Erreichen des Füllstandes von 31 wurde auf kontinuierliche Fahrweise geschaltet und die Polymerisationslösung auf eine Massetemperatur von 85°C gehalten. Nach 12 h war ein stabiler, stationärer Betriebszustand mit einem Feststoffgehalt (FG) von 12 % erreicht. Das zahlenmittlere Molekulargewicht betrug Mₙ = 46.000 g/mol bei einer Uneinheitlichkeit M_{w}/Mₙ = 2,61.

Beispiel 6a wurde mit den in Tabelle 3 zusammengestellten Parametern und Ergebnissen wiederholt (Beispiele 6 b, c und d):

**Tabelle 3:**

| Kontinuierliche Polymerisation von Styrol in einem Rührkessel: | | | | | | |
|---|---|---|---|---|---|---|
| Beispiel | sBuLi [ml/h] | DBM [ml/h] | TIBA [ml/h] | Li/Mg/Al | T [°C] | FG [%] |
| 6b | 1,67 | 2,13 | 1,54 | 1/0,8/0,925 | 85 | 22 |
| 6c | 0,93 | 3,3 | 0,93 | 1/2,2/1 | 100 | 15 |
| 6d | 0,78 | 4,0 | 0,98 | 1/3,2/1,25 | 110 | 18 |

### Vergleichsversuch 3:

Beispiel 6a wurde wiederholt, mit dem Unterschied, daß über getrennte Zuleitungen eine Lösung aus 2,66 ml/h einer 1,6 molaren s-Butyllithiumlösung in Cyclohexan und 12,34 ml/h Toluol sowie einer Lösung aus 2,58 ml/h einer 1,6 molaren Lösung von Triisobutylaluminium in Toluol und 10,4 ml/h Toluol (molares Verhältnis Li/Al = 0,97) versetzt. Im Verlauf mehrerer Tage schwankte der Feststoffgehalt im Rührkessel im Bereich von 3 - 25 Gew.-% und die Massetemperatur konnte nicht konstant auf 85°C gehalten werden.

### Beispiel 7

In einem Rührkessel wie in Beispiel 6 wurden kontinuierlich 300 g/h Toluol, 1200 g/h Styrol und eine über eine gemeinsame Zuleitung vorgemischte Initiatorlösung aus 0,98 ml/h einer einer 1,6 molaren s-Butyllithiumlösung in Cyclohexan, 5,78 ml/h einer 1 molaren DBM-Lösung in n-Heptan und 0,78 ml/h einer 1,6 molaren Lösung von Triisobutylaluminium in Toluol (molares Verhältnis Li/ Mg/Al = 1/3,7/0,8) dosiert und bei einer Massetemperatur von 97°C gerührt (100 Umdrehungen pro Minute). Der Austrag des Rührkessels wurde in einen gerührten, 4 Liter fassenden Turmreaktor weitergefördert. Über zwei gleich lange, nacheinander angeordnete Heizzonen wurde die Temperatur so eingestellt, daß die Innentemperatur am Ende der ersten Zone 120°C, am Ende der zweiten Zone 162°C betrug. Am Austritt des Turmreaktors wurde die Polymerisationsmischung über einen Mischer mit 20 g/h einer 10 Gew.-%igen Lösung aus Methanol in Toluol versetzt, anschließend durch ein auf 260°C beheiztes Rohrstück geführt und über ein Druckregelventil in einen auf 20 mbar gehaltenen Vacuumtopf entspannt. Die Schmelze wurde mit einer Schnecke ausgetragen und granuliert.

Nach wenigen Stunden stellte sich ein stabiler Gleichgewichtszustand in allen Anlagenteilen ein. Der Druckabfall über die gesamte Anlage betrug 1,8 bar. Der Feststoffgehalt am Ausgang des Rührkessels betrug 41 Gew.-%, am Ausgang des Turmreaktors 80 Gew.-%, was einem 100%igen Monomerumsatz entspricht. Es wurde ein Polystyrol mit einem Molekulargewicht von Mₙ = 176.000 g/mol und eine Uneinheitlichkeit M_{w}/Mₙ von 2,52 erhalten. Es wurde ein Gehalt von unter 10 ppm Styrol, unter 10 ppm Ethylbenzol und 105 ppm Toluol bestimmt.

### Beispiel 8

Für die kontinuierliche Polymerisation wurde ein Doppelmantel-Rohrreaktor mit einem Innendurchmesser von 29,7 mm und einer Länge von 2100 mm verwendet. Der Rohrreaktor war für einen Druck von bis zu 100 bar und für eine Temperatur von bis zu 350°C ausgelegt. Rohrreaktor wurde über ein im Gleichstrom geführtes Wärmeträgermedium temperiert und die Temperatur der Polymerisationsmischung über drei gleichmäßig über die Reaktionsstrecke verteilte Thermofühler bestimmt.

Über drei getrennte Pumpen wurden kontinuierlich mit 11/h Styrol, 0,15 1/h Ethylbenzol und 60,37 ml/h einer Initiatorlösung aus 0,75 ml einer einer 1,6 molaren s-Butyllithiumlösung in Cyclohexan, 4,1 ml einer 1 molaren DBM-Lösung in n-Heptan, 0,52 ml einer 1,6 molaren Lösung von Triisobutylaluminium in Toluol und 55 ml Ethylbenzol (molares Verhältnis Li/Mg/Al = 1/3,42/0,69) dem Rohrreaktor zugeführt. Die zudosierten Einsatzstoffe wurden jeweils auf 5°C gekühlt. Die Temperatur des Wärmeträgermediums betrug am Rohrreaktoreintritt 90°C. Die höchste Temperatur der Polymerisationslösung wurde am Ende des Rohrreaktor mit 208°C erreicht.

Nach Verlassen des Rohrreaktors wurde der Polymerisationsmischung eine 20 gew.-%igen Lösung von Methanol in Ethylbenzol mit 100 ml/h mittels einer HPLC-Pumpe zudosiert und in einem nachgeschalteten Rohrstück mit einem statischen Mischer homogenisiert. Die Polymerschmelze wird über ein Drosselventil in einen auf 20 mbar gehaltenen Entgasungstopf entspannt, mit einer Schneckenpumpe abgezogen, verstrangt und granuliert. Das erhaltene Polystyrol hatte ein Molekulargewicht M_{w} von 102. 000 bei einer Uneinheitlichkeit M_{w}/Mₙ von 1, 41. Der Restgehalt an monomerem Styrol betrug weniger als 10 ppm.

### Beispiel 9

Ein Doppelmantel-Rohrreaktor wie in Beispiel 8 beschrieben aber mit einer Länge von 3900 mm und fünf gleichmäßig über die Reaktionsstrecke verteilten Thermofühlern wurde verwendet.

Über drei getrennte Pumpen wurden kontinuierlich mit 11/h Styrol, 0,15 1/h Ethylbenzol und 57,94 ml/h einer Initiatorlösung aus 1,0 ml einer einer 1,6 molaren s-Butyllithiumlösung in Cyclohexan, 3,4 ml einer 1 molaren DBM-Lösung in n-Heptan, 1,54 ml einer 1,6 molaren Lösung von Triisobutylaluminium in Toluol und 52 ml Ethylbenzol (molares Verhältnis Li/Mg/Al = 1/2,13/1,54) dem Rohrreaktor zugeführt. Die zudosierten Einsatzstoffe wurden jeweils auf 5°C gekühlt. Die Temperatur des Wärmeträgermediums betrug am Rohrreaktoreintritt 110°C. Die höchste Temperatur der Polymerisationslösung wurde am Ende des Rohrreaktor mit 191°C erreicht.

Nach Verlassen des Rohrreaktors wurde der Polymerisationsmischung eine 20 gew.-%igen Lösung von Methanol in Ethylbenzol mit 100 ml/h mittels einer HPLC-Pumpe zudosiert und in einem nachgeschalteten Rohrstück mit einem statischen Mischer homogenisiert. Die Polymerschmelze wird über ein Drosselventil in einen auf 20 mbar gehaltenen Entgasungstopf entspannt, mit einer Schneckenpumpe abgezogen, verstrangt und granuliert. Das erhaltene Polystyrol hatte ein Molekulargewicht M_{w} von 142. 000 bei einer Uneinheitlichkeit M_{w}/Mₙ von 1,86. Der Restgehalt an monomerem Styrol betrug weniger als 10 ppm.

## Patentansprüche

1. Verfahren zur Homopolymerisation von vinylaromatischen Monomeren oder Copolymerisation von vinylaromatischen Monomeren und Dienen, dadurch gekennzeichent, daß man die Monomeren in Gegenwart von mindestens einem Alkalimetallorganyl, mindestens einem Magnesiumorganyl und mindestens einem Aluminiumorganyl polymerisiert, und wobei kein cyclisches Acetal eines Glyoxals und kein Phosphinoxid, das drei Substituenten mit gesättigten Heterocyclen aus einem Stickstoff- und zwischen 4 und 6 Kohlenstoffatomen trägt, zugegen ist.

2. Verfahren nach Anspruch 1, **dadurch gekennzeichnet, daß** man als Alkalimetallorganyl ein Lithiumorganyl einsetzt.

3. Verfahren nach den Ansprüchen 1 oder 2, **dadurch gekennzeichnet, daß** man ein molares Verhältnis von Magnesium zu Alkalimetall im Bereich von 0,2 bis 3,8 wählt.

4. Verfahren nach den Ansprüchen 1 bis 3, **dadurch gekennzeichnet, daß** man ein molares Verhältnis von Aluminium zu Alkalimetall im Bereich von 0,2 bis 4 wählt.

5. Verfahren nach den Ansprüchen 1 bis 4, **dadurch gekennzeichnet, daß** man ein molares Verhältnis von Magnesium zu Aluminium im Bereich von 0,05 bis 8 wählt.

6. Verfahren zur Homopolymeristion von Styrol nach den Ansprüchen 1 bis 5.

7. Verfahren nach den Ansprüchen 1 bis 6, **dadurch gekennzeichnet, daß** man bei einer anfänglichen Monomerenkonzentration im Bereich von 50 bis 100 Volumenprozent polymerisiert.

8. Verfahren nach den Ansprüchen 1 bis 7, **dadurch gekennzeichnet, daß** man die Polymerisation kontinuierlich durchführt.

9. Verfahren nach den Ansprüchen 1 bis 8, **dadurch gekennzeichnet, daß** man mindestens einen Teil des Umsatzes in einem nicht rückvermischenden Reaktor oder Reaktorabschnitt durchführt.

10. Initiatorzusammensetzung enthaltend mindestens ein Alkalimetallorganyl, mindestens ein Magnesiumorganyl und mindestens einem Aluminiumorganyl, dadurch gekennzeichent, daß
a) das molare Verhältnis von Magnesium zu Alkalimetall im Bereich von 0,2 bis 3,8,
b) das molare Verhältnis von Aluminium zu Alkalimetall im Bereich von 0,2 bis 4 liegt,
und die Initiatorzusammensetzung kein cyclisches Acetal eines Glyoxals und kein Phosphinoxid, das drei Substituenten mit gesättigten Heterocyclen aus einem Stickstoff- und zwischen 4 und 6 Kohlenstoffatomen trägt, enthält.

11. Verfahren zur Herstellung einer Initiatorzusammensetzung nach Anspruch 10, **dadurch gekennzeichnet, daß** man die in inerten Kohlenwasserstoffen gelösten Metallorganyle zusammen vermischt und bei einer Temperatur im Bereich von 0 bis 120°C mindestens 5 Minuten reifen läßt.

## Claims

1. A process for the homopolymerization of vinylaromatic monomers or the copolymerization of vinylaromatic monomers and dienes, which comprises polymerizing the monomers in the presence of at least one alkali metal organyl, at least one magnesium organyl and at least one aluminum organyl in the absence of any cyclic acetal of a glyoxal and any phosphine oxide which is substituted with three saturated heterocyclic rings, each hetero ring containing one nitrogen atom and 4-6 carbon atoms.

2. A process as claimed in claim 1, wherein the alkali metal organyl used is a lithium organyl.

3. A process as claimed in claims 1 or 2, wherein the molar ratio of magnesium to alkali metal is in the range from 0.2 to 3.8.

4. A process as claimed in any of claims 1 to 3, wherein the molar ratio of aluminum to alkali metal is in the range from 0.2 to 4.

5. A process as claimed in any of claims 1 to 4, wherein the molar ratio of magnesium to aluminum is in the range from 0.05 to 8.

6. A process for the homopolymerization of styrene as claimed in any of claims 1 to 5.

7. A process as claimed in any of claims 1 to 6, wherein the polymerization is carried out at an initial monomer concentration in the range from 50 to 100 percent by volume.

8. A process as claimed in any of claims 1 to 7, wherein the polymerization is carried out continuously.

9. A process as claimed in any of claims 1 to 8, wherein at least a part of the conversion is carried out in a non-backmixing reactor or reactor section.

10. An initiator composition comprising at least one alkali metal organyl, at least one magnesium organyl and at least one aluminum organyl, wherein
a) the molar ratio of magnesium to alkali metal is in the range from 0.2 to 3.8,
b) the molar ratio of aluminum to alkali metal is in the range from 0.2 to 4,
and the initiator composition does neither comprise any cyclic acetal of a glyoxal nor any phosphine oxide which is substituted with three saturated heterocyclic rings, each hetero ring containing one nitrogen atom and 4-6 carbon atoms.

11. A process for the preparation of an initiator composition as claimed in claim 10, which comprises mixing together the metal organyls, dissolved in inert hydrocarbons, and aging at a temperature in the range from 0 to 120°C for at least 5 minutes.

## Revendications

1. Procédé pour l'homopolymérisation de monomères vinylaromatiques ou la copolymérisation de monomères vinylaromatiques et de diènes, **caractérisé en ce que** l'on polymérise les monomères en présence d'au moins un composé organique de métal alcalin, d'au moins un composé organique de magnésium et d'au moins un composé organique d'aluminium, et en l'absence de tout acétal cyclique d'un glyoxal et de tout oxyde de phosphine portant trois substituants avec des hétérocycles saturés constitués d'un atome d'azote et de 4 à 6 atomes de carbone.

2. Procédé selon la revendication 1, **caractérisé en ce que** l'on met en oeuvre en tant que composé organique de métal alcalin un composé organique de lithium.

3. Procédé selon la revendication 1 ou 2, **caractérisé en ce que** l'on choisit une proportion molaire du magnésium au métal alcalin de l'ordre de 0,2 à 3,8.

4. Procédé selon les revendications 1 à 3, **caractérisé en ce que** l'on choisit une proportion molaire de l'aluminium au métal alcalin de l'ordre de 0,2 à 4.

5. Procédé selon les revendications 1 à 4, **caractérisé en ce que** l'on choisit une proportion molaire du magnésium à l'aluminium de l'ordre de 0,05 à 8.

6. Procédé d'homopolymérisation de styrène selon les revendications 1 à 5.

7. Procédé selon les revendications 1 à 6, **caractérisé en ce que** l'on entreprend la polymérisation avec une concentration de départ de monomères de l'ordre de 50 à 100% en volume.

8. Procédé selon les revendications 1 à 7, **caractérisé en ce que** l'on réalise la polymérisation en continu.

9. Procédé selon les revendications 1 à 8, **caractérisé en ce que** l'on entreprend au moins une partie de la réaction dans un réacteur ou une section de réacteur sans remélange.

10. Composition initiatrice contenant au moins un composé organique de métal alcalin, au moins un composé organique de magnésium et au moins un composé organique d'aluminium, **caractérisé en ce que**
a) la proportion molaire du magnésium au métal alcalin est de l'ordre de 0,2 à 3,8,
b) la proportion molaire de l'aluminium au métal alcalin est de l'ordre de 0,2 à 4,
et la composition initiatrice ne contient pas d'acétal cyclique d'un glyoxal ni d'oxyde de phosphine portant trois substituants avec des hétérocycles saturés constitués d'un atome d'azote et de 4 à 6 atomes de carbone.

11. Procédé de préparation d'une composition initiatrice selon la revendication 10, **caractérisée en ce qu'**on mélange les composés organiques de métal dissous dans des solvants organiques inertes et qu'on les laisse reposer pendant au moins 5 minutes à une température de l'ordre de 0 à 120°C.
